# EUROPÄISCHE PATENTSCHRIFT

(11) **EP 4 488 559 B1**
(45) Veröffentlichungstag und Bekanntmachung des Hinweises auf die Patenterteilung: **01.07.2026**
(21) Anmeldenummer: 24187064.1
(22) Anmeldetag: 08.07.2024
(51) Int. Cl.: F16L 5/10, E04B 1/68, H02G 3/22

(54) **WIEDERVERWENDBARES ABDICHTELEMENT**
REUSABLE SEALING ELEMENT
ÉLÉMENT D'ÉTANCHÉITÉ RÉUTILISABLE

(30) Priorität: 07.07.2023 EP 23184041
(43) Veröffentlichungstag der Anmeldung: 08.01.2025
(73) Patentinhaber: Wolf, Roland, 70437 Stuttgart (DE)
(72) Erfinder: Wolf, Roland, 70437 Stuttgart (DE)
(74) Vertreter: Jeck, Jonathan

(56) Entgegenhaltungen:
- EP-A1- 1 867 904
- EP-A1- 3 474 402

## Beschreibung

Die vorliegende Erfindung betrifft eine Nachhaltige grüne Sealing Clip-Abdichtung (ScA), vorzugsweise gegen Rauch-, Feuer-, schleichende Gase und Wasserfortleitung gemäß Anspruch 1.

Die Erfindung betrifft eine 20-jährige stetige Weiterentwicklung von ADE (Abdichtelement) 50/100. Entwickelt werden sollte eine Alternative zu ADE 50/100 zum Patent DE 692 207 86 T2 zum mehrfachen Aus- und Wiedereinbau der ADE ohne Druckkapseln mit 16 g CO2- Füllung.

### Bekannter Stand der Technik

| | | |
|---|---|---|
| DE 103 41 005 A1 | Anmeldung am 05.09.2003 | Abdichtelement Ventil |
| EP 1867 904 B1 | Anmeldung am 18.06.2006 | Abdichtelement Ventil und die aktuellsten Entwicklungen |
| PCT/EP 2016/052 784 | Anmeldung am 10.02.2016 | Abdichtelement Ventil |
| PCT/EP 2017/065 542 | Anmeldung am 23.06.2017 | Abdichtelement PE-Schlauch |
| EP 22 166 173.9 | Anmeldung am 17.11.2022 | SQ-Band |

Aus der EP 3 474 402 A1 geht ein Abdichtelement hervor, dass zur geringen Brauchbarkeitdauer ausgebildet ist. Es wird nicht offenbart, dass das Einfüllrohr als Alu-Verbundrohr bestehend aus einem PE-LD beschichteten Aluminium-Rohr mit oder ohne innenliegendem PE-LD Rohr ausgeführt ist und dass das Ventil ein reversibel verbindbares
Aufsteckventil ist.

Aus der EP 1 867 904 A1 geht ein Abdichtelement hervor, dass als Energiekabelabdichtung ausgebildet ist. Es wird nicht offenbart, dass das Einfüllrohr als Alu-Verbundrohr bestehend aus einem PE-LD beschichteten Aluminium-Rohr mit oder ohne innenliegendem PE-LD Rohr ausgeführt ist und dass das Ventil ein reversibel verbindbares
Aufsteckventil ist.

Mit Weitblick kann jetzt mit der nach 20 Jahren weiterentwickelten Version international eine umweltfreundliche, auf Schadstoffemission als auch hinsichtlich Energieverbrauch mehrfach CO2 freie ScA Abdichtsystem nachhaltig verwendet werden.

Bei Druckfüllung mit Pumpe / Kompressor und Evakuierung von mit oder ohne Kabel oder Rohre belegten Schutzrohren oder Gebäudeein-/ durchführungen, unabhängig von Durchmesser und Anzahl der belegten Durchführung wird eine Rauch- Wasserfortleitung bis 5 m Wassersäule erreicht.

Man erkennt, dass die Erfindung zumindest durch ein Wiederverwendbares Abdichtelement für Fugen, Kabeldurchführungen und Gebäude-ein-/-durchführungen ausgebildet mit einem Alu-Verbundrohr PE-LD beschichteten Aluminium-Rohr mit innenliegendem PE-LD Rohr, welche mit einem mechanisch reversibel verbindbaren Aufsteckventilanschluss ausgebildet ist, im gequetschten Zustand des Rohrs eine Weiterleitung von Gas durch das Einfüllstück zuverlässig zu unterbinden.

Die Erfindung kann auch durch ein wiederverwendbares Abdichtelement für Fugen, Kabeldurchführungen und Gebäude-ein-/-durchführungen ausgebildet mit einem Alu-Verbundrohr PE-LD beschichteten Aluminium-Rohr mit innenliegendem PE-LD Rohr, welche ausgebildet ist, im gequetschten Zustand des Rohrs eine Weiterleitung von Gas durch das Einfüllstück zuverlässig zu unterbinden, mit einem reversibel verbindbaren Aufsteckventil verwirklicht sein.

### Im direkten Vergleich zu ADE 50/100

Die Patentanmeldung DE 692 207 86 T2 offenbart ein z.B. bundesweit > 200 000 Stück/Jahr gelöchertes Abdichtkissen mit einem selbstfüllenden Gel eingelagerten PE-Schlauch Ø 2,0 mm. Nach 16g CO2 Druck-Kapselfüllung wird der PE-Schlauch entfernt und das Abdichtkissenloch durch das Gel abgedichtet. Das Abdichtkissenloch dient nur zur einmaligen Nutzung.

### Variante 1 Patent Nr. PCT/EP 2017/065 542

Das 2 Mal wiederverwendbare Flachschlauch-Abdichtelement ist bereitgestellt, mit einem mit dem Kissen verschweißten PE-Einfüllschlauch (PE = Polyethylen), mit maximal zwei aufgeschrumpften strahlungsvernetzten 30 mm PE-Abschnitten, mit zwei metallenen Crimphülsen, zum druckdichten Verschließen des Einfüllschlauches. Weitere Nachteile bestehen beim PE-Einfüllschlauch. Z.B. hohe Leckrate, UVunbeständig, hohe Bruchgefahr bei Kabelmontage, Verlegearbeiten in Schachtanlagen.

### Variante 2 Patent Nr. PCT/EP 2016/052 784

Offenbart eine PE- beschichtete metallene Ventilrohr-Verlängerung, mit eingelötetem metallenen Reifen-Druckluftventil, das mit dem Flachschlauch-Abdichtelement bis 6 bar druckdicht verschweißt ist.

Mit Weitblick auf die Abdichtelement mehrfache Anwendung und einer möglichen erheblichen Kostensenkung, des mit dem PE-Metallrohr verschweißten Ventils, war die neue Erfindung anzugehen.

Die Aufgabe der vorliegenden Erfindung ist es, ein nachhaltiges preiswertes Abdichtelement, insbesondere ein Abdichtkissen, bereit zu stellen, welches, deutlich häufiger wiederbefüllbar ist, als es die Lösungen aus dem Stand der Technik erlauben.

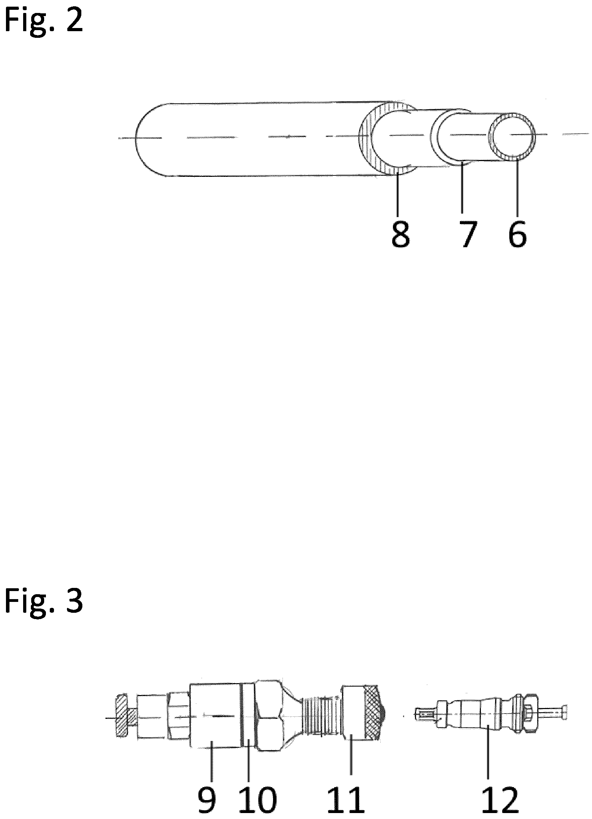

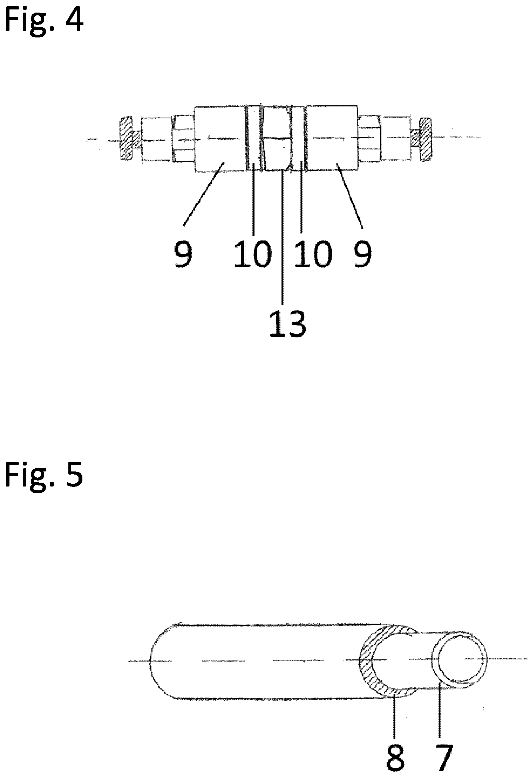

Nach einer bevorzugten Ausführungsform der Erfindung wird diese Aufgabe durch ein Alu-Verbundrohr (Mehrschichtverbundrohr) bestehend aus PE-LD beschichtetem Aluminiumrohr (AL/DE-LD) (Fig. 5), Durchmesser 4,0 mm oder durch zusätzlich mit einem innenliegenden PE-LD Rohr (Fig. 2) ausgestattet in Kombination mit einem reversibel verbindbaren Aufsteckventil Clip-Ventilanschluss) oder Clip-Clip-Rohranschluss gelöst.

Bevorzugt handelt es sich hierbei um das folgende System:
LD-AL/DE-LD-Rohr (Durchmesser 4, 0 mm)
   "LD" = PE - LD (Polyethylen-LD)
   AL = Aluminium - "LD" = PE - LD
und metallenem Clip-Ventilanschluß (Fig. 3), oder Clip-Clip-Rohrverbindungsanschluß (Fig. 4), Variante 1 und Variante 2 im Hinblick auf wirtschaftliche Nutzung der Abdichtanwendung ganzheitlich zu betrachten.

Je länger das Einfüll-Alu-Verbundrohr, desto mehr Wiederbefüllungen sind, bei wiederholtem Abnehmen des Ventilanschlusses möglich.

Die Aufgaben können mit einer Ausführungsform gelöst werden, welche die folgenden Merkmale aufweist.

Die erste vorteilhafte Ausgestaltung der Erfindung ist dadurch gekennzeichnet, dass das Flachschlauch-Abdichtelement (Fig. 1) (ScA) mit einem Einfüll-Alu-Verbundrohr AL/DE-LD Rohr (Fig. 2), vorzugsweise in Sonderlängen 200, 300 oder 500 mm, mit einem Clip-Ventil (Fig. 3) Schnellsteck-Verbinderanschluß, beispielsweise CO2 frei, mit einem Kompressor oder einer Druckluftpumpe befüllt oder evakuiert bereitgestellt werden kann:
a) **Zur mehrfachen Nutzung des Sealing-Clip-Abdichtsystems (ScA)** nach Einbau des ScA-Abdichtelementes und der erforderlichen Kabel-/ Rohr SQ-Zwischenraumabdichtung, wird der Clip-Ventil Schnellsteckanschluß (Fig. 3) am Alu-Verbundrohr (Fig. 2) aufgesteckt und das (ScA)- Abdichtelement mit Luft/CO₂ frei < 4,0 bar befüllt, das AL/DE-LD Alu-Verbundrohr (Fig. 2) verquetscht und der Clip-Ventilanschluß (Fig. 3) entfernt und aufbewahrt für mehrfach gleichwertige Anwendungen.
b) **Bei mehrfachen Kabelnachbelegungen** ohne Clip-Ventilanschluß wird das verklemmte Alu-Verbundrohr AL/DE-LD Rohr abgeschnitten, die Luft automatisch evakuiert, das ScA-Abdichtelement ausgebaut, die Kabel-/Rohre durchgezogen, die Zwischenräume mit SQ-Band abgedichtet und das ScA-Abdichtelement wieder eingebaut. Der Clip-Ventil Schnellsteckanschluß wird wieder am abgeschnittenen AL/DE-LD -Rohr aufgesteckt, mit Luft befüllt und kann am Rohr aufgesteckt bleiben, oder das AL/DE-LD-Rohr verquetscht und der Clip-Ventilanschluß entfernt werden.
c) **Eine weitere vorteilhafte Ausgestaltung der Erfindung besteht darin,** dass der befindliche Clip-Ventil Schnellsteckanschluß dauerhaft gesteckt bleibt. Nach Druckfüllung kann bis 4,0 bar im Temperaturbereich - 30°C bis 70 °C zur dauerhaft möglichen reduzierten Druckanpassung oder Kabel-/Rohrnachbelegungen aufgesteckt bleiben. Für Kabel-/ Rohrnachbelegungen muss der Clip-Ventil Schnellsteckanschluß nicht entfernt werden. Eine Luftevakuierung kann über das Reifenventil erfolgen. Bei mehr als 100 Druckfüllungen sollte der Ventileinsatz ausgetauscht werden.

**Eine besondere wesentliche Weiterbildung der Erfindung kann darin bestehen,** dass das Alu-Verbundrohr (AL/DE-LD) (Alu-PE-Rohr) (Fig. 5) für mehrfache Anwendungsbereiche ausgebildet ist:
a) Für das ScA-Abdichtsystem ist das AL/DE-LD-Rohr auch auf der Innenseite mit einem LD (PE-LD) Rohr (Fig. 2) ausgestattet, wodurch bei dem verquetschten Abdichtsystem eine Summenleckrate von < 2,7 mbar I/Jahr gewährleistbar ist.
b) Eine weitere zweckmäßige Weiterbildung der vorliegenden Erfindung kann darin bestehen, dass das Problem von gummierten Druckschlauch-Verbindungen, mit Leckraten bis über 0,1 bar/ 24 h gelöst ist. Die Erweiterung besteht darin, dass mit einem Clip-Clip Anschluss (Fig. 4) zusätzlich mit einem bis über 100 m langen AL/DE-LD-Verbindungsrohre (Fig. 5) für Langzeit-Drucküberwachungen, mit einer Leckrate < 2,7 mbar I/Jahr (ohne inneres PE-LD - (low density polyethylen) Rohr) und einseitig mit Clip-Ventil (Fig. 3) Schnellsteckeranschlüssen anwendbar ist.

Die Erfindung wird nun anhand von Ausführungsbeispielen näher erläutert.

### Figurenübersicht der Erfindung

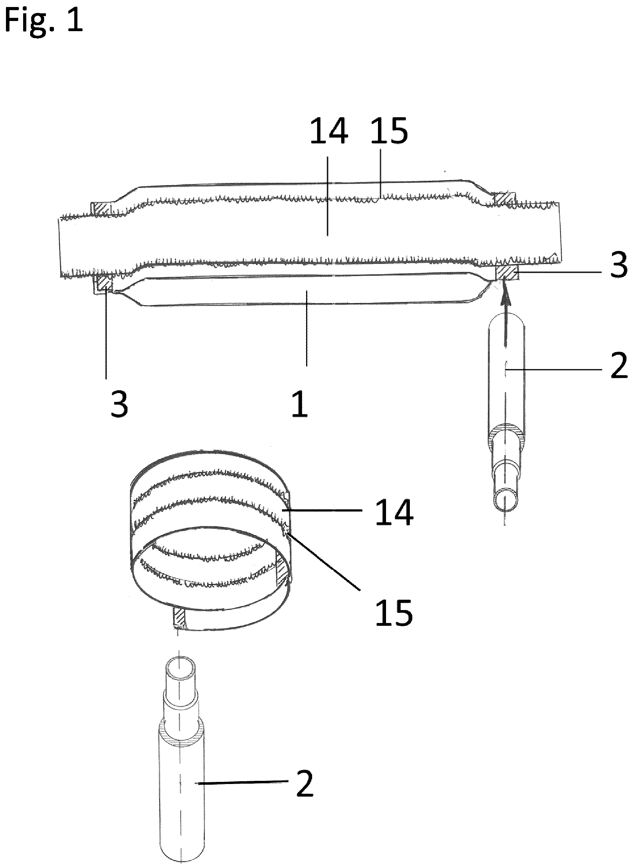

Nachhaltiges ScA-Abdichtsystem, eine perspektivische Übersicht der Fig. 1 bis 8:
Fig.1 eine perspektivische Ansicht des ScA Flachschlauch-Abdichtelement im flachen und gerollten Zustand, aufweisend einen Folienschlauch (1), vorzugsweise aus einem Folienband im Formschulter- Schweißverfahren Patent EP 22 188 931.4. Die Querverschweißung (3) mit / ohne 4,0 mm Durchmesser Pneumatikrohr (2), erfolgt vorzugsweise nach Patent EP 22 188 931.4 im Siegel-Schweißverfahren bis zu einer 4 bar druckdichten Abdichtung (hierbei offenbart bei Referenz).
Fig. 2 eine perspektivische Ansicht der Erfindung eines im Durchmesser von 4,0 mm biegsamen Alu-Verbundrohres, bestehend aus einem (LD) (8) beschichteten Aluminium (AL) (7) Rohr, mit innenliegendem PE-LD ("LD") - Rohr (6), dass das (AL/DE-LD) Rohr in Abschnitten von vorzugsweise 200, 300, 400 oder 500 mm Länge. Nach Patent EP 221 889 314 wird das wie in Fig. 1 dargestellt mit einer druckfesten Querverschweißung (3) des Folienschlauches (1) im Siegelschweißverfahren das AL/DE-LD-Rohr (3, 4) zum ScA Abdichtelement vorzugsweise bis 6 bar druckdicht verschlossen.

Nach Druckfüllung der ScA-Abdichtung über einen Clip-Ventilanschluß Fig. 3 kann unmittelbar nach dem Schnellsteckanschluß das AL/DE-LD-Alu-Verbundrohr (Fig. 2) druckdicht verpresst und der Clip-Ventilanschluß (Fig. 3) zur weiteren Anwendung entfernt werden.

Für jede weitere Kabelnachbelegung kann das Rohr gratfrei abgeschnitten und über einen Clip-Ventilanschluß die ScA-Abdichtung neu befüllt werden.

Fig. 3 eine perspektivische Ansicht eines Vielfach-wiederholbaren-Clip Ventilanschlußes (Fig. 3), aufweisend einen Clip-Schnellsteck-Einverschraubung (9), mit O-Dichtring (10) und einem metallenen Druckluft-Einschraubventil (11) und Ventileinsatz (12). Nach mehr als 10-maliger Druckfüllung des (ScA) Abdichtsystems ist nur der Ventileinsatz (12) zu wechseln.

Fig. 4 eine perspektivische Ansicht einer Clip-Clip-Rohrverbindung (Fig. 4), bestehend aus zwei Clip-Schnellsteckverbindungen (9) mit O-Dichtring (10) mit einem Doppelgewindenippel (13).

Fig. 5 eine perspektivische Ansicht eines im Durchmesser von 4,0 mm biegsamen Alu-Verbundrohres AL/DE-LD, bestehend aus einem PE-LD (8) (Polyethylen niedriger Dichte) beschichtetem AL (Aluminiumrohr) (7).

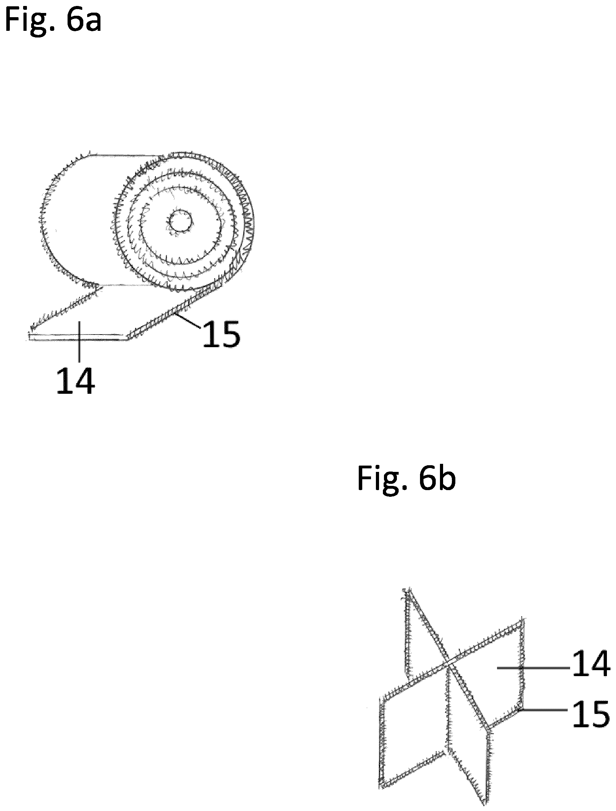

Fig. 6 eine perspektivische Ansicht eines SQ-Bandes (- (Stark)quellfähiges Band), stark quellendes Polymergelspeicherdichtbandes (14), umnäht (15), hergestellt z.B. für Anwendungsbereiche Patent Nr. EP 221 661 734, oder z.B. als SQ-Dichtstern als Zwischenraumabdichtung von mit Kabeln oder Rohren belegten Abdichtungen gegen Wasserfortleitung.

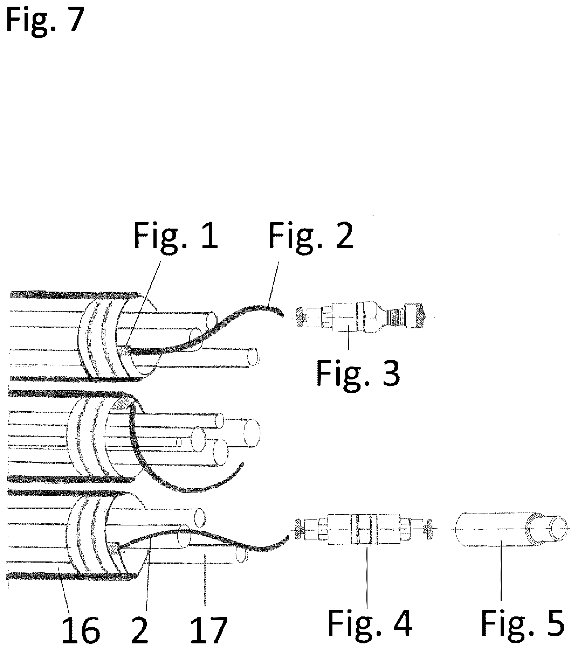

Die Fig. 7 zeigt eine perspektivische Ansicht der Weiterentwicklung eines gezeigten nachhaltigen grünen Sealing-Clip-Abdichtelementes (ScA) mit den Erfindungen Fig. 1, 2, 3, 4 und 5 unter Betriebsbedingungen einer ScA-Montage.

In Fig. 7 ist die gleichwertige Ausgestaltung der ScA Sealing Clip-Abdichtung zu den Patenten:
a) PCT/EP 2017/065542 und WO 2016/128 435 mittels PE-Einfüllschlauchs und Crimphülse
b) PCT/EP 2016/052 784 mittels PE-beschichteter metallener Ventilverlängerung mit eingelötetem Reifenventil
c) EP 221 661 735 wird mittels stark quellfähiger Wasserspeicher umnähten Bändern (14,15) gezeigt.

Eine besondere bevorzugte Weiterentwicklung der Erfindung besteht darin, dass das Flachschlauchabdichtelement an einer Querseite mit einem biegsamen AL/DE-LD (2) Alu-Verbundrohres im Durchmesser 4,0 mm (2), vorzugsweise mit einer Summenleckrate von ≤ 2,7 bar I/Jahr, in Baustellen gerechten (Fig. 7) Längen ≤ 500 mm zu mehr als 50-maligem ausgebauten und wieder eingebauten ScA Abdichtelementunter sehr engen bauseitigen Bedingungen ausgebildet ist, das je nach Anwendungsbereich mit einem Schnellsteck Clip-Ventil Fig. 3, oder einer Schnellsteck Clip-Clip-Rohrverbindung Fig. 4 und AL/DE-LD-Rohrverbindung Fig. 5 hergestellt ist.

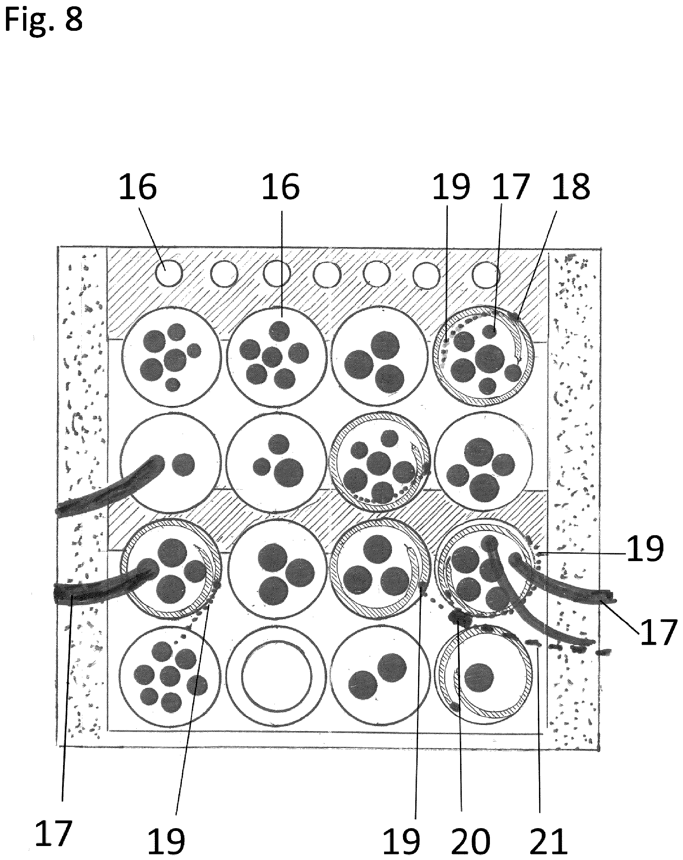

Fig. 8 zeigt eine Ansicht zur Baustellen-gerechten ScA-Abdichttechnik am Beispiel einer mit Kabeln oder Rohren KKR 50,110 (16) belegten Rohranlage (17) bei der T-Com Kommunikationsbranche, EVU-Stadtwerke (Energieversorgungsunternehmen).

Unabhängig von KKR 50, 110 (16) sind Hinweise im KKR 110 mit bis zu 19 Stück im Durchmesser unterschiedlichen Kabel-/Rohren belegt (17). Je nach ScA-Anwendungsbereich (18) kann die nachhaltige mehrfache ScA-Abdichtung mit einem bis zu 500 mm langen oder längeren AL/DE-LD Alu-Verbundrohr (2) Rohr so um die Kabel zur Nachbelegung gebogen (19), über Fig. 3 Reifenventil (11) mehrfach mit Luft befüllt, evakuiert werden.

Für ScA-Fülldrucküberwachung, Druckanpassung kann zwischen AL/DE-LD (18) und AL/DE-LD-Rohr (21) mit einem Clip-Clip (20) Clip-Rohrverbinder Fig. 4 bis über 100 m hergestellt werden.

### Bezugszeichenliste

### Begriffserklärung / Verwendung Abkürzungen

| | | |
|---|---|---|
| 1 | Folienschlauch aus einem Folienband im flachen oder gerollten Zustand | |
| 2 | AL/DE-LD | Alu-Verbundrohr / Mehrschichtverbundrohr (PE-LD, Aluminium, PE-LD) Rohr Ø 4,0 mm |
| 3 | AL/DE-LD-Rohr | im Siegelschweißverfahren an einer oder an beiden Folienschlauchenden miteinander verschweißt |
| 4 | SQ-Abdichtband | stark quellendes polymerspeicherndes Band "Wasserspeicher" |
| 5 | SQ-Band umnäht | zur Polymergelsperrschicht |
| 6 | LD (PE-LD) | Polyethylen niedrige Dichte, Rohr-Innenseite |
| 7 | AL | (Aluminium mit gut verformbarem weichem Kunststoff) |
| 8 | LD | (PE-LD) extrudiertem AL-Rohr, Beschichtung außen |
| 9 | Clip | Schnellsteck Clip-Einverschraubung für Einfüll-Alu-Verbundrohr/Rohr/AL/DE-LD (Fig. 2 und Fig. 5) |
| 10 | O | O-Dichtring |
| 11 | V | Einschraub Reifenventil |
| 12 | VE | Ventileinsatz |
| 13 | DGN | Doppelgewindenippel |
| 14 | SQ-Band | 4 stark quellendes wassersaugendes superabsorbieren des Abdichtband |
| 15 | SQ-Band umnäht | (5) Polymergelsperrschicht |
| 16 | KKR 50/100 | Kabelkanalrohr Ø 50 mm / KKR Ø 110 mm |
| 17 | Kabel-/ Rohrbelegung | |
| 18 | ScA-Abdichtung | (1) mit AL/DE-LD-Rohr |
| 19 | AL/DE-LD-Rohr | Alu-Verbundrohr gebogen Fig. 2 innen und außen beschichtet |
| 20 | Clip-Clip | Clip-Rohrverbinder Fig. 4 |
| 21 | AL/DE-LD-Rohr | Alu-Verbundrohr /Rohr Fig. 5 nur außen beschichtet |

## Patentansprüche

1. Wiederverwendbares befüllbares Abdichtelement für Fugen, Kabeldurchführungen und Gebäude-ein-/-durchführungen ausgebildet mit einem an einem Einfüllstück des Abdichtelements angeordneten Verbundrohr, nämlich einem von außen PE-LD beschichteten Aluminium-Rohr mit oder ohne innenliegendem PE-LD Rohr, welches Verbundrohr mit einem mechanisch reversibel verbindbaren Aufsteckanschluss ausgebildet ist, wobei das Verbundrohr ausgelegt ist im gequetschten Zustand des Verbundrohres eine Weiterleitung von Gas durch das Einfüllstück (3) zuverlässig zu unterbinden.

2. Wiederverwendbares Abdichtelement nach Anspruch 1
**dadurch gekennzeichnet,**
**dass** der Aufsteckanschluß ein Clip-Clip oder ein Clip-Ventilanschluss ist.

3. Wiederverwendbares Abdichtelement nach Anspruch 1 oder 2
**dadurch gekennzeichnet,**
**dass** ein Clip-Aufsteckventil mit einem beliebigen gekürzten Abschnitt des Einfüll-Alu-Verbundrohrs verbindbar ist.

4. Wiederverwendbares Abdichtelement nach Anspruch 3
**dadurch gekennzeichnet,**
**dass** der Aufsteckanschluss ein Clip-Ventilanschlussistoder ein Clip-Clip-Rohranschluf ist.

## Claims

1. A reusable fillable sealing element for joints, cable penetrations and building entries/penetrations, designed with a composite tube arranged at a filling piece of the sealing element, namely an externally PE-LD coated aluminum tube with or without an internal PE-LD tube, wherein the
composite tube is designed with a mechanically reversibly connectable push-on connection, wherein the composite tube is configured to reliably prevent transmission of gas through the filling piece (3) in a crimped state of the composite tube.

2. The reusable sealing element according to claim 1,
**characterized in that**
the push-on connection is a clip-clip or a clip valve connection.

3. The reusable sealing element according to claim 1 or 2,
**characterized in that**
a clip push-on valve is connectable with any shortened section of the filling aluminum composite tube.

4. The reusable sealing element according to claim 3,
**characterized in that**
the push-on connection is a clip valve connection or a clip-clip tube connection.

## Revendications

1. Élément d'étanchéité remplissable réutilisable pour des joints, des passages de câbles et des entrées/pénétrations de bâtiment, conçu avec un tube composite disposé au niveau d'une pièce de remplissage de l'élément d'étanchéité, à savoir un tube en aluminium revêtu extérieurement de PE-LD avec ou sans tube interne en PE-LD, dans lequel le
tube composite est conçu avec une connexion enfichable mécaniquement réversiblement connectable, dans lequel le tube composite est configuré pour empêcher de manière fiable la transmission de gaz à travers la pièce de remplissage (3) dans un état serti du tube composite.

2. Élément d'étanchéité réutilisable selon la revendication 1,
**caractérisé en ce que**
la connexion enfichable est une connexion clip-clip ou une connexion à valve à clip.

3. Élément d'étanchéité réutilisable selon la revendication 1 ou 2,
**caractérisé en ce que**
une valve enfichable à clip est connectable avec toute section raccourcie du tube composite en aluminium de remplissage.

4. Élément d'étanchéité réutilisable selon la revendication 3,
**caractérisé en ce que**
la connexion enfichable est une connexion à valve à clip ou une connexion de tube clip-clip.
